# DEMANDE DE BREVET EUROPEEN

(11) **EP 1 339 013 A1**
(43) Date de publication de la demande: **27.08.2003**
(21) Numéro de dépôt: 03075469.1
(22) Date de dépôt: 18.02.2003
(51) Int. Cl.: G06K 17/00

(54) **Procédé et dispositif de traçabilité d'un produit nécessitant un suivi de ses conditions de traitement et de conservation**

(30) Priorité: 19.02.2002 FR 0202259
(71) Demandeur: Leblanc, François, 51100 Reims (FR); Bassahon, Philippe, 87000 Limoges (FR); Mestdagh, Bruno, 86340 Vernon (FR); Seneczko, Frédéric, 02160 Maizy (FR)
(72) Inventeur: Leblanc, François, 51100 Reims (FR); Bassahon, Philippe, 87000 Limoges (FR); Mestdagh, Bruno, 86340 Vernon (FR); Seneczko, Frédéric, 02160 Maizy (FR)
(74) Mandataire: Debay, Yves

(57) **Abrégé**

La présente invention concerne un procédé et un dispositif de traçabilité d'un produit susceptible de subir des changements de ses conditions de traitement et de conservation pouvant entraîner une mise en danger du consommateur, au cours de la préparation, du stockage ou encore de la livraison du produit, réalisés dans des locaux adaptés. Le procédé de traçabilité est caractérisé en ce qu'il comprend une étape consistant à associer au produit ou à un des locaux le dispositif de traçabilité (1). Le dispositif de traçabilité (1) est caractérisé en ce qu'il comprend au moins un capteur (4), permettant des mesures d'au moins un paramètre physique au coeur du produit, un circuit intégré, comportant une mémoire (6) permettant l'enregistrement de données d'évolution dudit ou desdits paramètre(s) physique(s) à intervalles déterminés et l'enregistrement du temps, des moyens d'émission/réception sans fil (7) et un moyen d'alimentation (3) fournissant une autonomie aux différents composants du dispositif.

## Description

La présente invention concerne un procédé et un dispositif de traçabilité d'un produit, par exemple alimentaire, susceptible de subir des changements de conditions de traitement et de conservation au cours de sa préparation, de son stockage ou encore de sa livraison, tels que des expositions prolongées à des températures non souhaitées, pouvant entraîner une mise en danger du consommateur.

Il est connu dans l'art antérieur peu de procédés de traçabilité d'un produit nécessitant un suivi de ses conditions de traitement et de conservation depuis sa fabrication jusqu'à sa livraison, puisque les différentes étapes du procédé sont souvent gérées de façon indépendante par des dispositifs propres à chaque contenant par lequel passe le produit, de la chambre froide au moyen de transport de livraison, en passant par le four. Il est connu d'autres procédés de traçabilité tels que ceux proposés par la société Micro Lide palliant la gestion séparée de chaque étape. Toutefois, ces procédés présentent l'inconvénient de ne pas suivre en temps réel l'évolution au cours du temps des paramètres physiques tels que la température des produits. Il présente également l'inconvénient de posséder des moyens filaires de transmission des informations, qui sont peu pratiques car nécessitant un câblage des locaux ou des installations.

Par ailleurs, il est connu dans l'art antérieur divers supports d'information utilisés à des fins de traçabilité de produits nécessitant un suivi de leurs conditions de traitement et de conservation, tels que des étiquettes électroniques permettant de stocker des informations sur la provenance des produits, leur date de fabrication, ou encore des paramètres physiques. Un inconvénient majeur de ces dispositifs est qu'ils ne permettent pas de suivre en temps réel l'évolution au cours du temps des paramètres physiques. Un autre inconvénient réside dans les moyens de transmission des informations, qui est souvent filaire, et donc peu pratique.

La présente invention a donc pour objet de pallier un ou plusieurs des inconvénients de l'art antérieur en proposant un procédé de traçabilité fiable, automatique et facile d'utilisation ou d'installation.

Ce but est atteint par le procédé de traçabilité d'un produit nécessitant un suivi de ses conditions de traitement et de conservation par le fait qu'il comprend, parmi les activités se déroulant successivement dans des locaux comportant des installations adaptées, de stockage, préparation, cuisson, refroidissement, stockage temporaire et livraison d'un produit à conserver, une étape consistant à associer audit produit ou à un des locaux, un dispositif de traçabilité comportant un circuit intégré et une mémoire pour mémoriser dans le dispositif de traçabilité un identifiant du produit ou du local et un script, le script comprenant des normes spécifiques au produit ou au local et, dans le cas d'un produit, la succession des locaux par lesquels le produit doit passer.

Selon une autre particularité, le procédé de traçabilité comprend une étape de mesure par un moyen de mesure du dispositif de traçabilité, et d'enregistrement dans le dispositif de traçabilité d'au moins un paramètre physique à surveiller, à intervalles déterminés, suivie d'une étape de comparaison par le dispositif de traçabilité de l'évolution du ou des paramètre(s) physique(s) au cours du temps avec la plage de valeurs du ou des paramètre(s) prévue pour l'étape de mesure dans le script mémorisé.

Selon une autre particularité, le procédé de traçabilité comprend, en cas d'erreur entre l'évolution du ou des paramètre(s) physique(s) au cours du temps et la plage de valeurs prévue dans le script, une étape d'émission par des moyens d'émission/réception du dispositif de traçabilité vers un boîtier émetteur/récepteur associé au local dans lequel se trouve le produit, d'un message d'erreur "paramètres" comprenant l'évolution du ou des paramètre(s) physique(s) au cours du temps et l'identifiant du produit ou du local.

Selon une autre particularité, le procédé de traçabilité comprend, hormis pendant la livraison, une étape de relais du message d'erreur "paramètres" du boîtier émetteur/récepteur vers un site central.

Selon une autre particularité, le procédé de traçabilité comprend, à chaque entrée ou sortie du produit d'un local, hormis celui adapté à la livraison, dites accès, une étape d'émission d'un message de passage du produit à proximité d'un portique parmi plusieurs portiques situés dans le local par des moyens d'émission/réception dudit portique vers le dispositif de traçabilité, au moins un portique étant situé à proximité de chaque accès au local hormis celui adapté à la livraison, le message de passage du produit à proximité d'un portique du local comprenant une identification du local et une donnée de temps.

Selon une autre particularité, le procédé de traçabilité comprend une étape d'enregistrement et de comparaison par le dispositif de traçabilité du moment auquel le produit a passé le portique du local avec la succession des locaux mémorisée dans le script.

Selon une autre particularité, le procédé de traçabilité comprend, en cas d'erreur entre le moment auquel le produit a passé le portique du local et la succession des locaux mémorisée dans le script, une étape d'émission par les moyens d'émission du dispositif de traçabilité d'un message d'erreur "accès" vers le portique à proximité duquel passe le produit, puis d'émission d'une alarme sonore ou visuelle par le portique, le message d'erreur "accès" comprenant l'identifiant du produit et l'évolution du produit dans les différents locaux au cours du temps.

Selon une autre particularité, le procédé de traçabilité comprend une étape de relais du message d'erreur "accès" du portique vers le site central.

Selon une autre particularité, le site central est un centre informatique qui centralise les informations de tous les récepteurs/émetteurs et de tous les portiques, les informations étant transmises à un boîtier émetteur/récepteur situé dans le local d'un gérant et relié par des moyens de communication au site central, le centre informatique comprenant un logiciel comprenant au moins les normes spécifiques au produit ou au local, ainsi qu'un diagramme synoptique de l'ensemble des locaux affiché sur un écran, permettant de signaler le local où s'est produite l'erreur, le type d'erreur, et la démarche à suivre pour éliminer l'erreur.

Selon une autre particularité, le procédé de traçabilité comprend, lorsque le gérant est informé de la démarche à suivre, une étape d'intervention dudit gérant, consistant, si l'erreur est irrémédiable, à éliminer le produit, et si l'erreur est réparable, à la réparer, puis une étape d'enregistrement dans le site central d'une notification de l'action du gérant accompagnée d'un code identifiant le gérant.

Selon une autre particularité, le procédé de traçabilité comprend une étape d'interrogation par des moyens de communication sans fil des informations mémorisées dans le dispositif de traçabilité.

Selon une autre particularité, le procédé de traçabilité comprend, avant la cuisson, une étape d'enrobage du dispositif de traçabilité du produit et de chargement du produit et du dispositif de traçabilité enrobé, dans un ustensile.

Selon une autre particularité, le procédé de traçabilité comprend, pendant la livraison, une étape de transport du produit par un moyen de transport, et de localisation géographique dudit moyen de transport par l'intermédiaire d'un système GPS.

Selon une autre particularité, le procédé de traçabilité comprend, en cas d'erreur, une étape de relais du message d'erreur "paramètres" du boîtier émetteur/récepteur vers le site central par transmission GSM.

Selon une autre particularité, le procédé de traçabilité comprend une étape d'émission par un télémètre de données d'ouverture du moyen de transport et de temps vers le site central.

Selon une autre particularité, le procédé de traçabilité comprend une étape de stockage sur un site internet du message d'erreur "paramètres", du message d'erreur "accès", des informations mémorisées dans le dispositif de traçabilité, de la localisation géographique du moyen de transport et de l'évolution de l'ouverture du moyen de transport au cours du temps.

Selon une autre particularité, le message d'erreur "paramètres", le message d'erreur "accès", les informations mémorisées dans le dispositif de traçabilité (1), la localisation géographique du moyen de transport et l'évolution de l'ouverture du moyen de transport au cours du temps sont cryptés.

Selon une autre particularité, le procédé de traçabilité comprend une étape de transformation d'un produit primaire en un produit combiné pendant l'activité préparation et une étape de transformation d'un produit primaire ou d'un produit combiné en un produit cuisiné pendant l'activité cuisson.

Selon une autre particularité, le procédé de traçabilité comprend, pendant la préparation, une étape de transfert des informations mémorisées dans tous les dispositifs de traçabilité associés aux produits primaires vers le dispositif de traçabilité associé au produit combiné.

Un autre but de l'invention est de proposer un dispositif de traçabilité fiable et facile d'utilisation.

Ce but est atteint par le dispositif de traçabilité d'un produit nécessitant un suivi de ses conditions de traitement et de conservation, par le fait qu'il comprend au moins un capteur, permettant des mesures d'au moins un paramètre physique au coeur dudit produit, un circuit intégré, comportant une mémoire permettant l'enregistrement de données d'évolution dudit ou desdits paramètre(s) physique(s) à intervalles déterminés et l'enregistrement du temps, des moyens d'émission/réception sans fil et un moyen d'alimentation fournissant une autonomie aux différents moyens et circuits du dispositif.

Selon une autre particularité, l'un des paramètres physiques est la température.

Selon une autre particularité, les moyens d'émission/réception sans fil sont à signaux optiques ou radiofréquences.

Selon une autre particularité, le dispositif de traçabilité est moulé dans un matériau bactériologiquement à l'abri de toute nuisance.

Selon une autre particularité, le dispositif de traçabilité est utilisé dans un système de traçabilité d'un produit nécessitant un suivi de ses conditions de traitement et de conservation, comportant des boîtiers émetteurs/récepteurs équipant des locaux par lesquels le produit doit passer au cours d'un processus de transformation, chaque boîtier émetteur/récepteur déclenchant soit une opération de mesure du dispositif de traçabilité, soit des émissions de données du dispositif de traçabilité vers le boîtier émetteur/récepteur qui envoie les données à un site central, soit les deux.

D'autres particularités et avantages de la présente invention apparaîtront plus clairement à la lecture de la description ci-après faite en référence aux dessins annexés dans lesquels :
- la figure 1 représente une vue schématique du dispositif de traçabilité.
- la figure 2 représente une vue de côté schématique d'un portique.
- la figure 3 représente une vue de dessus schématique d'une usine de transformation de produits, par exemple, alimentaires.
- la figure 4 représente une vue de côté schématique d'un camion de livraison.
- la figure 5 représente une vue en perspective d'un mode de réalisation de la sonde.
- la figure 6 représente une vue en perspective d'un autre mode de réalisation de la sonde.
- la figure 7 représente une vue en perspective d'un mode de réalisation du portique.

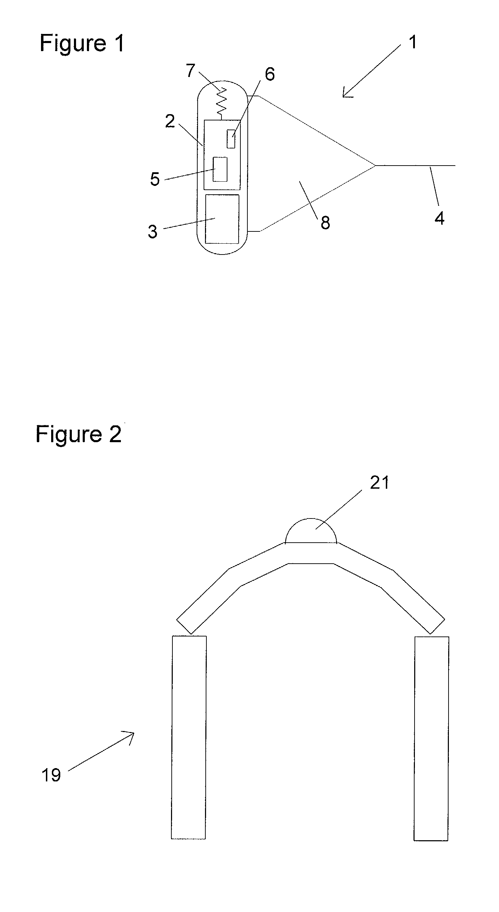

Le dispositif de traçabilité représenté sur la figure 1, et appelé sonde (1) est, par exemple, une enveloppe de forme triangulaire, dans laquelle sont disposés au moins une puce (2) comprenant au moins un microprocesseur (5) et une mémoire (6), par exemple de 40 Ko, un capteur de température (4), une antenne (7) d'émission/réception associée à un circuit de traitement et d'émission/réception, par exemple radiofréquence ou hyperfréquence, et une batterie rechargeable (3). La sonde (1) peut être munie d'autres capteurs pouvant mesurer d'autres paramètres physiques, tels que le degré d'humidité par exemple. L'ensemble est moulé dans un matériau (8) bactériologiquement à l'abri de toute nuisance pour la santé, et constituant l'enveloppe.

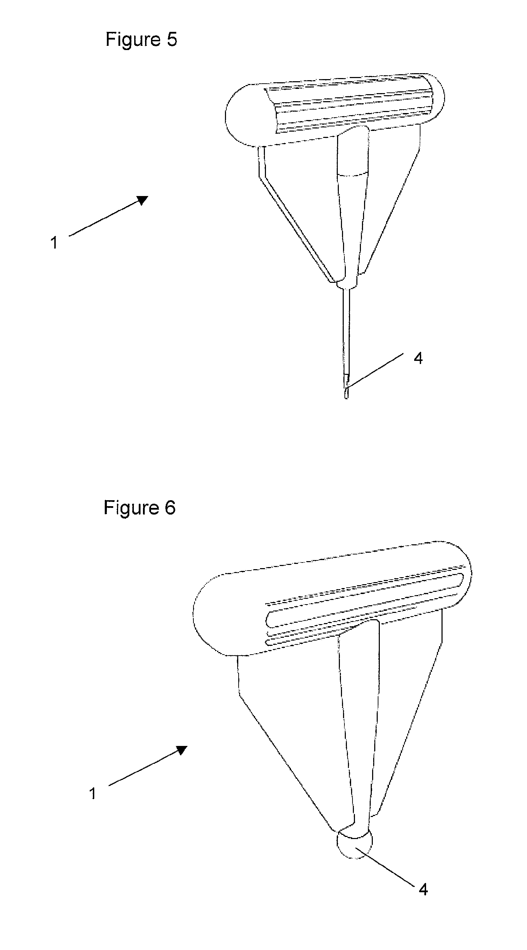

Le capteur de température (4) est porté par la sonde soit au bout d'une tige pouvant être plantée dans un produit, par exemple alimentaire, comme représenté sur la figure 5, soit à un bout de la sonde afin d'être en contact avec le produit, lorsque la texture de ce dernier ne permet pas d'y planter une sonde, comme représenté sur la figure 6.

La mémoire (6) permet de stocker un script comprenant la courbe de température à respecter pendant les différentes phases de transformation du produit à "tracer" en plat cuisiné à livrer ou les plages de valeurs à respecter pour chaque phase de transformation, pour assurer une bonne conservation du produit. Cette courbe tient compte d'une directive européenne ayant fixé des normes de conservation des différents produits à "tracer". La courbe du script comprend donc des températures de conservation et des marges et des durées de tolérance de températures. Par exemple, le jambon doit être conservé à + 4°C, mais supporte des températures ne dépassant pas + 10°C. En revanche, une quiche lorraine qui doit également être conservé à + 4°C, ne devra pas être maintenue plus d'une demi-heure à une température supérieure à + 6°C pour rester consommable.

Les mesures de température au coeur du produit à "tracer" sont exécutées par la puce (2) à des instants déterminés mémorisés. Les valeurs mesurées par le capteur de température, par exemple par conductivité thermique, sont stockées dans la mémoire (6) et leur évolution au cours du temps est comparée par le microprocesseur (5) au script mémorisé. L'antenne (7) permet à la puce (2) de communiquer avec des unités électroniques (18, 19) permettant indirectement au gérant de suivre la trace du produit (17). Enfin, la batterie rechargeable (3) permet l'autonomie de la sonde (1).

Le produit (17) à "tracer" est en réalité un ensemble de denrées, par exemple alimentaires, identiques faisant partie d'un même lot et ayant subi et devant subir les mêmes opérations au même moment. Dans le mode de réalisation préféré, cinq puces permettent de "tracer" 1000 denrées.

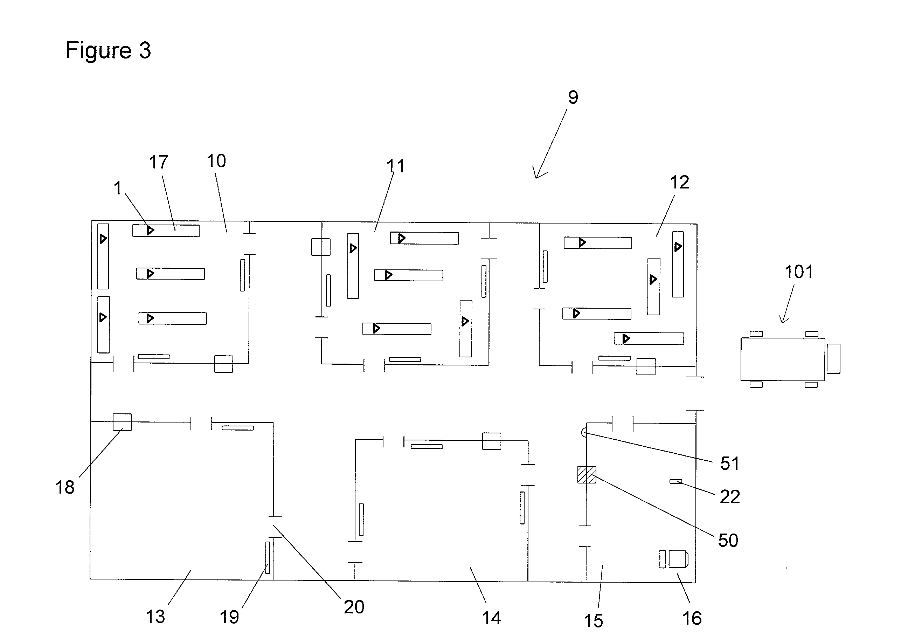

La finalité de la présente invention est de tracer des produits (17) nécessitant un suivi de leurs conditions de traitement et de conservation, donc par exemple alimentaires, qui vont être cuisinés dans une usine (9) de transformation de produits en plats cuisinés à livrer, dont un mode de réalisation est représenté sur la figure 3. Ces produits sont par exemple livrés à des établissements possédant des restaurants collectifs, par exemple des écoles, des maisons de retraite, des entreprises, etc... L'usine selon le mode de réalisation représenté sur la figure 3 comprend différents locaux comportant des installations adaptées à différentes activités comme :
- le stockage, par exemple dans une réserve sèche (10), une chambre froide (11) à une température par exemple de + 4°C ou une chambre de surgélation (12) à une température par exemple de - 16°C,
- la préparation dans une salle de préparation (13),
- la cuisson dans une salle de fours (14),
- le refroidissement et le stockage temporaire dans les locaux de stockage (10, 11, 12).

Il peut exister plusieurs locaux adaptés à la même activité. Il existe également un local de gestion de la traçabilité, dit bureau du gérant (15), dans lequel est installé l'ordinateur (16) du gérant muni d'un logiciel de traçabilité, et éventuellement d'un écran tactile, le logiciel comprenant en particulier les normes de conservation des différents produits selon leur degré de transformation (produits primaires, combinés ou cuisinés). Lorsqu'il a été décidé de la composition des repas, le gérant entre dans l'ordinateur (16) chaque plat composant les repas à livrer. Le logiciel, par l'intermédiaire d'un écran, va alors afficher les produits primaires nécessaires et les étapes de transformation nécessaires mémorisés dans une base de données. Le logiciel fournit également des scripts pour tous les produits primaires, combinés et cuisinés nécessaires. Un code produit permettant d'identifier le produit est alors également fourni par le logiciel. Supposons, par exemple, qu'un des plats à préparer est une quiche. Une fois que le gérant aura informé le logiciel que le plat est une quiche, le logiciel va afficher sur l'écran les données de sa base de données concernant la quiche, à savoir les produits primaires nécessaires à sa réalisation, leur lieu de conservation et les étapes qu'ils devront subir. Ainsi, les produits primaires peuvent être, par exemple, une pâte surgelée conservée dans la chambre de surgélation (12), et du jambon et de la sauce conservés dans la chambre froide (11), ou encore de la farine conservée dans la réserve sèche (10) et des oeufs, du jambon et de la crème fraîche conservés dans la chambre froide (11). Les étapes que les produits primaires devront subir sont donc, par exemple, tout d'abord un transport du ou des local(locaux) de stockage dans la salle de préparation (13) où les produits primaires seront combinés, puis un transport du produit combiné dans la salle des fours (14) où celui-ci sera cuit à une température de, par exemple, + 300°C, enfin un transport du produit cuisiné dans la chambre froide (11) où il sera refroidi en moins de 2 heures, et où il devra être stocké jusqu'à la livraison. Le local adapté à la livraison (100) est l'intérieur du camion de livraison (101).

La sonde (1), représentée en figure 1, est faite pour supporter des températures comprises entre - 16°C et + 85°C. Cette gamme de températures est intéressante puisque - 16°C correspond à la température de surgélation et + 85°C correspond à la température de pasteurisation, à laquelle doivent rester pendant 10 heures les produits à pasteuriser.

Au-dessus de + 85°C (lorsque le produit est en train de cuire dans la salle des fours (14)), il est nécessaire d'ôter la sonde (1) du produit et d'emballer le produit (17) dans une barquette avec une autre sonde embarquée enrobée par une technologie qui résiste aux hautes températures (au moins à la température de cuisson du produit) et transmet les données de température à la puce (2) de la sonde (1) restée près du four pendant la cuisson.

Entre le stockage et la livraison, le produit (17) subit différentes étapes de transformation qui nécessitent, en particulier, son transport d'un local (10, 11, 12, 13, 14, 100) adapté à une activité à un autre local (10, 11, 12, 13, 14, 100) adapté à une activité différente.

Plusieurs produits primaires peuvent être combinés pour obtenir un produit combiné, par exemple dans la salle de préparation. Les informations mémorisées dans chaque sonde associée à chaque produit primaire ayant été utilisé pour réaliser le produit combiné, sont alors transférées dans une sonde ayant reçu le script adapté au produit combiné, par le biais de la haute fréquence. De même, après cuisson d'un produit primaire ou combiné, les informations contenues dans la sonde associée à ces produits sont transférées dans la sonde associée au produit cuisiné, qui a également reçu le script adapté audit produit cuisiné, par le biais de la haute fréquence.

Chaque local (10, 11, 12, 13, 14, 100) est équipé d'un boîtier émetteur/récepteur (18). La puce (2) de la sonde (1) associée au produit (17) compare l'évolution, au cours du temps ou au cours des différentes phases de sa transformation, de la température mesurée au coeur du produit à celle prévue dans le script mémorisé. Les différentes de phases de transformation du produit sont déterminées par le passage devant un portique émetteur/récepteur, qui sera décrit plus loin, ou par un événement temporel. Lorsqu'une anomalie survient, la puce (2) émet, grâce à l'antenne (7), par radiofréquence, par exemple par hautes fréquences, vers le boîtier émetteur/récepteur (18), un message d'erreur "paramètres" comprenant le code identifiant le produit, ainsi que l'évolution des données de température au cours du temps. Le message d'erreur "paramètres" est alors relayé par le boîtier émetteur/récepteur (18) :
- soit vers le boîtier émetteur-récepteur (50) du bureau du gérant, par hautes fréquences pour les boîtiers émetteurs/récepteurs situés dans les locaux (10, 11, 12, 13, 14) se trouvant à l'intérieur de l'usine.
- soit par transmission GSM pour le boîtier émetteur/récepteur situé à l'intérieur du camion (100), vers l'ordinateur (16) du gérant.
Le boîtier émetteur/récepteur (50) du bureau du gérant est relié par câblage à l'ordinateur (16) du gérant. Ces messages sont cryptés et stockés également sur un site internet spécialisé dans la traçabilité alimentaire et mémorisant dans une base de données les différentes données émises par chaque usine de transformation. L'ensemble des données sont récupérables en cas de procédure judiciaire. Par ailleurs, lorsque l'ordinateur du gérant reçoit le message d'erreur, une alarme sonore ou visuelle se déclenche afin de prévenir le gérant, par exemple par l'intermédiaire d'un gyrophare (51) situé à l'extérieur du bureau du gérant. Le logiciel, équipé d'un diagramme synoptique de l'usine, affiche également sur l'écran le local dans lequel l'erreur s'est produite, par exemple par mise en surbrillance de l'emplacement du local sur le diagramme.

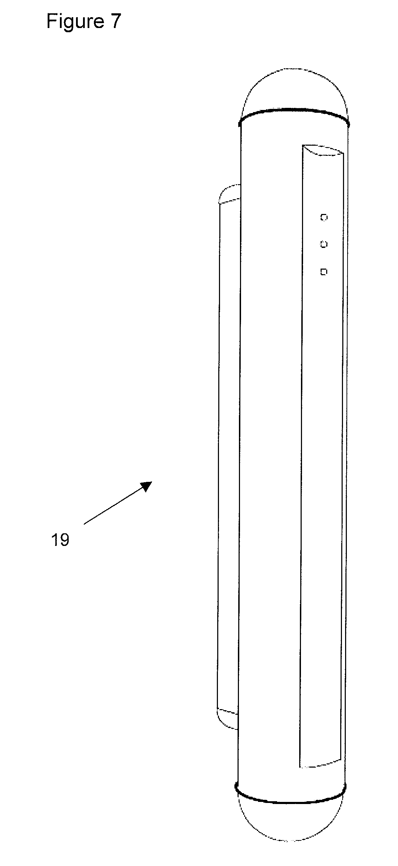

Chaque local (10, 11, 12, 13, 14) hormis celui de livraison (100) est équipé d'un portique (19) à proximité de chaque accès au local, c'est-à-dire, par exemple, à proximité de chaque porte. Un mode de réalisation d'un portique est représenté en particulier sur les figures 2 et 7. Il a, par exemple, une forme d'arc et est par exemple équipé de moyens d'émission/réception intégrés et d'un gyrophare (21) situé sur le dessus du portique. Lorsque le produit (17) passe à proximité d'un des portiques (19), le portique émet un message de passage à proximité d'un portique par radiofréquence, par exemple par hautes fréquences, vers la sonde (1) associée audit produit (17), la sonde enregistrant alors ce message dans la mémoire (6). Le message de passage à proximité d'un portique comprend le nom du local dans lequel entre ou duquel sort le produit, ainsi que l'instant où cela se produit. Ces données sont comparées par la puce (2) à la succession des locaux mémorisée dans le script et une mesure de paramètres est déclenchée par la puce si nécessaire. S'il y a une anomalie, l'antenne (7) de la sonde (1) envoie un message d'erreur "accès" au portique à proximité duquel le produit auquel elle est associée vient de passer. Le message d'erreur "accès" comprend le code identifiant le produit, ainsi que le suivi du produit dans les différents locaux par lesquels il est passé au cours du temps. Le portique (19) qui a reçu le message d'erreur "accès" émet alors une alarme sonore ou visuelle, par exemple par l'intermédiaire du gyrophare (21) situé sur le portique (19). Le portique relaie ce message par radiofréquence, par exemple par hautes fréquences, au boîtier émetteur/récepteur (50) situé dans le bureau du gérant. Ce message déclenche, comme dans le cas de la réception d'un message d'erreur "paramètres", une transmission du message d'erreur "accès" par le réseau de câblage informatique à l'ordinateur (16) du gérant, avec déclenchement d'une alarme visuelle ou sonore et un enregistrement, sous forme cryptée, du message d'erreur "accès" sur le site internet spécialisé dans la traçabilité alimentaire.

Lorsque le logiciel de traçabilité est prévenu d'une erreur "paramètres" ou "accès", il propose, sur un écran tactile :
- soit des moyens d'y remédier, qui peuvent être l'élimination du produit si l'anomalie, compte tenu du script, est irrémédiable, ou encore la réparation de l'anomalie si elle est, compte tenu du script, réparable par exemple en cuisant le produit.
- soit une autre possibilité.
Le gérant, identifié par un code personnel l'identifiant, doit informer le logiciel de la mesure prise. Sinon, le logiciel de traçabilité déclenche un suivi du produit par l'intermédiaire des boîtiers émetteurs/récepteurs (18) et des portiques (19) afin de connaître le devenir du produit. Dans le cas où un cuisinier, et non le gérant, prend la décision, le logiciel de traçabilité prévoit que le gérant doit approuver la décision. Les données sont ensuite transférées sur le site internet spécialisé dans la traçabilité alimentaire. Ainsi, si le gérant n'a pas suivi une instruction, et si une personne ayant mangé un produit qui n'a pas été conservé suivant toutes les normes de conservation, tombe malade ou meurt, le responsable sera connu.

A tout moment du procédé de traçabilité, le gérant peut lire les informations contenues dans la puce (2) de la sonde (1) associée au produit (17), soit directement à partir d'une télécommande (22), soit indirectement à partir de son ordinateur (16), par l'intermédiaire des boîtiers émetteurs/récepteurs (18) ou des portiques (19).

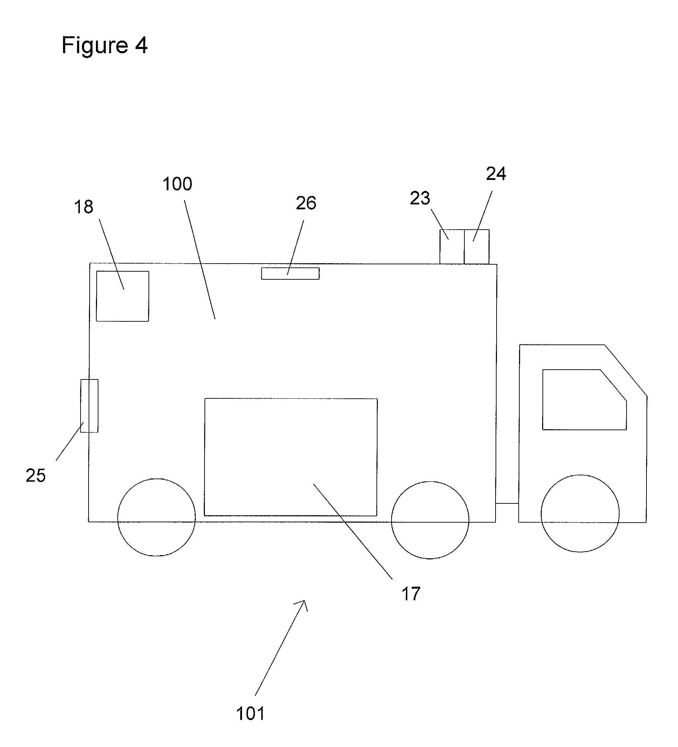

Lorsque le produit (17) a subi les différentes transformations et qu'il est prêt à être livré, il est transporté dans un camion de livraison (101). Le camion, représenté en particulier sur la figure 4, est équipé d'un système GPS, qui permet au logiciel de traçabilité installé sur l'ordinateur (16) du gérant de l'usine (9) de transformation, de localiser le camion à tout moment, d'un système GSM, qui permet au logiciel de traçabilité de recevoir les éventuels messages d'erreur "paramètres", et d'un télémètre, qui permet au logiciel de traçabilité de savoir à quels moments la porte du camion a été ouverte ou fermée. Le logiciel de traçabilité prévoit que si la porte du camion reste ouverte trop longtemps ou si le camion reste immobile trop longtemps, l'ordinateur (16) du gérant déclenche une alarme sonore ou visuelle pour prévenir celui-ci. Le client à livrer et le livreur sont alors également prévenus de l'anomalie. A la fin de la livraison, le client, muni d'une télécommande, peut lire les informations contenues dans les sondes associées aux produits qui lui ont été livrés et peut, en fonction du respect ou non des normes de conservation, accepter ou non les produits. Les sondes associées aux produits livrés sont ensuite récupérées par le livreur et rapportées à l'usine (9) de transformation. Le gérant vérifie les informations contenues dans les sondes et transmet un fax au client pour lui confirmer la consommabilité ou non des produits livrés. Toutes les informations reçues par l'ordinateur (16) du gérant sont cryptées et stockées également sur le site internet spécialisé dans la traçabilité alimentaire.

Dans un autre mode de réalisation représenté sur la figure 4, le camion de livraison peut être équipé, s'il est usagé et n'en dispose pas déjà, d'un capteur de pression (26) placé au niveau de la source de gaz de refroidissement du système de réfrigération du camion. Si la pression est trop basse, il faut alors recharger le système de réfrigération en gaz.

Dans un autre mode de réalisation, chaque local (10, 11, 12, 13, 14, 100) peut être muni d'une sonde "local", dans laquelle a été mémorisé un script prévu pour le local comprenant des informations sur des paramètres physiques, comme, par exemple, la température ambiante, à maintenir dans le local et la marge de tolérance des paramètres, la sonde "local" mesurant et enregistrant les paramètres physiques du local auquel elle est associée à des instants déterminés, et comparant l'évolution de ces paramètres avec le script prévu pour le local. En cas d'anomalie, la sonde émet un message d'erreur "local" vers le boîtier émetteur/récepteur (18) du local auquel elle est associée, le boîtier émetteur/récepteur relayant le message d'erreur "local" de la même façon que le message d'erreur "paramètres", ce qui permet alors au gérant d'intervenir.

Après la livraison dans un restaurant collectif, le produit peut subir des étapes de stockage et de réchauffage dans la cuisine de ce restaurant. Il peut également être prévu que ces étapes fassent partie du procédé et que les sondes des produits livrés soient maintenues avec les produits jusqu'à leur consommation par les clients du restaurant.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus

## Revendications

1. Procédé de traçabilité d'un produit nécessitant un suivi de ses conditions de traitement et de conservation, **caractérisé en ce qu'**il comprend, parmi les activités se déroulant successivement dans des locaux (10, 11, 12, 13, 14, 100) comportant des installations adaptées, de stockage, préparation, cuisson, refroidissement, stockage temporaire et livraison d'un produit (17) à conserver, une étape consistant à associer audit produit ou à un des locaux, un dispositif de traçabilité (1) comportant un circuit intégré et une mémoire (6) pour mémoriser dans le dispositif de traçabilité (1) un identifiant du produit ou du local et un script, le script comprenant des normes spécifiques au produit ou au local et, dans le cas d'un produit, la succession des locaux (10, 11, 12, 13, 14, 100) par lesquels le produit doit passer.

2. Procédé de traçabilité selon la revendication 1, **caractérisé en ce qu'**il comprend une étape de mesure par un moyen de mesure (4) du dispositif de traçabilité, et d'enregistrement dans le dispositif de traçabilité (1) d'au moins un paramètre physique à surveiller, à intervalles déterminés, suivie d'une étape de comparaison par le dispositif de traçabilité (1) de l'évolution du ou des paramètre(s) physique(s) au cours du temps avec la plage de valeurs du ou des paramètre(s) prévue pour l'étape de mesure dans le script mémorisé.

3. Procédé de traçabilité selon la revendication 2, **caractérisé en ce qu'**il comprend, en cas d'erreur entre l'évolution du ou des paramètre(s) physique(s) au cours du temps et la plage de valeurs prévue dans le script, une étape d'émission par des moyens d'émission/réception (7) du dispositif de traçabilité (1) vers un boîtier émetteur/récepteur (18) associé au local (10, 11, 12, 13, 14, 100) dans lequel se trouve le produit, d'un message d'erreur "paramètres" comprenant l'évolution du ou des paramètre(s) physique(s) au cours du temps et l'identifiant du produit ou du local.

4. Procédé de traçabilité selon la revendication 3, **caractérisé en ce qu'**il comprend, hormis pendant la livraison, une étape de relais du message d'erreur "paramètres" du boîtier émetteur/récepteur (18) vers un site central (16).

5. Procédé de traçabilité selon l'une des revendications 1 à 4, **caractérisé en ce qu'**il comprend, à chaque entrée ou sortie du produit d'un local (10, 11, 12, 13, 14) hormis celui adapté à la livraison (100), dites accès (20), une étape d'émission d'un message de passage du produit à proximité d'un portique (19) parmi plusieurs portiques situés dans le local (10, 11, 12, 13, 14), par des moyens d'émission/réception dudit portique (19) vers le dispositif de traçabilité (1), au moins un portique étant situé à proximité de chaque accès (20) au local (10, 11, 12, 13, 14) hormis celui adapté à la livraison (100), le message de passage à proximité d'un portique (19) du local (10, 11, 12, 13, 14) comprenant une identification de l'installation et une donnée de temps.

6. Procédé de traçabilité selon la revendication 5, **caractérisé en ce qu'**il comprend une étape d'enregistrement et de comparaison par le dispositif de traçabilité (1) du moment auquel le produit (17) a passé le portique (19) du local (10, 11, 12, 13, 14) avec la succession des locaux mémorisée dans le script.

7. Procédé de traçabilité selon la revendication 6, **caractérisé en ce qu'**il comprend, en cas d'erreur entre le moment auquel le produit a passé le portique (19) du local (10, 11, 12, 13, 14) et la succession des locaux mémorisée dans le script, une étape d'émission par les moyens d'émission (7) du dispositif de traçabilité (1) d'un message d'erreur "accès" vers le portique (19) à proximité duquel passe le produit (17), puis d'émission d'une alarme sonore ou visuelle par le portique (19), le message d'erreur "accès" comprenant l'identifiant du produit et l'évolution du produit dans les différents locaux (10, 11, 12, 13, 14) au cours du temps.

8. Procédé de traçabilité selon la revendication 7, **caractérisé en ce qu'**il comprend une étape de relais du message d'erreur "accès" du portique (19) vers le site central (16).

9. Procédé de traçabilité selon l'une des revendications 4 à 8, **caractérisé en ce que** le site central est un centre informatique (16) qui centralise les informations de tous les récepteurs/émetteurs (18) et de tous les portiques (19), les informations étant transmises à un boîtier émetteur/récepteur (50) situé dans l'installation d'un gérant (15) et relié par des moyens de communication au site central, le centre informatique comprenant un logiciel comprenant au moins les normes spécifiques au produit ou au local, ainsi qu'un diagramme synoptique de l'ensemble des locaux affiché sur un écran, permettant de signaler le local où s'est produite l'erreur, le type d'erreur, et la démarche à suivre pour éliminer l'erreur.

10. Procédé de traçabilité selon la revendication 9, **caractérisé en ce qu'**il comprend, lorsque le gérant est informé de la démarche à suivre, une étape d'intervention dudit gérant, consistant, si l'erreur est irrémédiable, à éliminer le produit, et si l'erreur est réparable, à la réparer, puis une étape d'enregistrement dans le site central (16) d'une notification de l'action du gérant accompagnée d'un code identifiant le gérant.

11. Procédé de traçabilité selon l'une des revendications 1 à 10, **caractérisé en ce qu'**il comprend une étape d'interrogation par des moyens de communication sans fil des informations mémorisées dans le dispositif de traçabilité (1).

12. Procédé de traçabilité selon l'une des revendications 1 à 11, **caractérisé en ce qu'**il comprend, avant la cuisson, une étape d'enrobage du dispositif de traçabilité (1) et de chargement du produit (17) et du dispositif de traçabilité (1) enrobé, dans un ustensile.

13. Procédé de traçabilité selon l'une des revendications 1 à 12, **caractérisé en ce qu'**il comprend, pendant la livraison, une étape de transport par un moyen de transport (101), et de localisation géographique dudit moyen de transport (101) par l'intermédiaire d'un système GPS (23).

14. Procédé de traçabilité selon la revendication 13, **caractérisé en ce qu'**il comprend, en cas d'erreur, une étape de relais du message d'erreur "paramètres" du boîtier émetteur/récepteur (18) vers le site central (16) par transmission GSM (24).

15. Procédé de traçabilité selon l'une des revendications 13 ou 14, **caractérisé en ce qu'**il comprend une étape d'émission par un télémètre (25) de données d'ouverture du moyen de transport et de temps vers le site central.

16. Procédé de traçabilité selon la revendication 15, **caractérisé en ce qu'**il comprend une étape de stockage sur un site internet du message d'erreur "paramètres", du message d'erreur "accès", des informations mémorisées dans le dispositif de traçabilité (1), de la localisation géographique du moyen de transport et de l'évolution de l'ouverture du moyen de transport au cours du temps.

17. Procédé de traçabilité selon l'une des revendications 15 ou 16, **caractérisé en ce que** le message d'erreur "paramètres", le message d'erreur "accès", les informations mémorisées dans le dispositif de traçabilité (1), la localisation géographique du moyen de transport et l'évolution de l'ouverture du moyen de transport au cours du temps sont cryptés.

18. Procédé de traçabilité selon l'une des revendications 1 à 17, **caractérisé en ce qu'**il comprend une étape de transformation d'un produit primaire en un produit combiné pendant l'activité de préparation et une étape de transformation d'un produit primaire ou d'un produit combiné en un produit cuisiné pendant l'activité cuisson.

19. Procédé de traçabilité selon la revendication 18, **caractérisé en ce qu'**il comprend, pendant la préparation, une étape de transfert des informations mémorisées dans tous les dispositifs de traçabilité associés aux produits primaires vers le dispositif de traçabilité associé au produit combiné.

20. Dispositif de traçabilité d'un produit nécessitant un suivi de ses conditions de traitement et de conservation, **caractérisé en ce qu'**il comprend au moins un capteur (4), permettant des mesures d'au moins un paramètre physique au coeur dudit produit, un circuit intégré comportant une mémoire (6) permettant l'enregistrement de données d'évolution dudit ou desdits paramètre(s) physique(s) à intervalles déterminés et l'enregistrement du temps, des moyens d'émission/réception sans fil (7) et un moyen d'alimentation (3) fournissant une autonomie aux différents moyens et circuits du dispositif (1).

21. Dispositif de traçabilité selon la revendication 20, **caractérisé en ce que** l'un des paramètres physiques est la température.

22. Dispositif de traçabilité selon l'une des revendications 20 ou 21, **caractérisé en ce que** les moyens d'émission/réception sans fil (7) sont à signaux optiques ou radiofréquences.

23. Dispositif de traçabilité selon l'une des revendications 20 à 22, **caractérisé en ce qu'**il est moulé dans un matériau bactériologiquement à l'abri de toute nuisance (8).

24. Utilisation du dispositif de traçabilité selon l'une des revendications 20 à 23 dans un système de traçabilité d'un produit nécessitant un suivi de ses conditions de traitement et de conservation, comportant des boîtiers émetteurs/récepteurs (18) équipant des locaux (10, 11, 12, 13, 14, 100) par lesquels le produit doit passer au cours d'un processus de transformation, chaque boîtier émetteur/récepteur (18) déclenchant soit une opération de mesure du dispositif de traçabilité (1), soit des émissions de données du dispositif de traçabilité (1) vers le boîtier émetteur/récepteur (18) qui envoie les données à un site central (16), soit les deux.
